# FASCICULE DE BREVET EUROPEEN

(11) **EP 3 145 745 B1**
(45) Date de publication et mention de la délivrance du brevet: **06.05.2020**
(21) Numéro de dépôt: 16709423.4
(22) Date de dépôt: 10.03.2016
(51) Int. Cl.: B60K 17/10, F16H 61/4139, B60K 17/354, B60K 17/356

(54) **DISPOSITIF D'ASSISTANCE HYDRAULIQUE SUR VÉHICULE ET PROCÉDÉ DE MISE À VIDE D'UN TEL DISPOSITIF**
FAHRZEUGMONTIERTE HYDRAULISCHE UNTERSTÜTZUNGSVORRICHTUNG UND VERFAHREN ZUM LEEREN SOLCH EINER VORRICHTUNG
VEHICLE-MOUNTED HYDRAULIC ASSISTANCE DEVICE AND METHOD FOR EVACUATING SUCH A DEVICE

(30) Priorité: 13.03.2015 FR 1500495
(43) Date de publication de la demande: 29.03.2017
(62) Demande divisionnaire de: 16205571.9
(73) Titulaire: Poclain Hydraulics Industrie, 60410 Verberie (FR)
(72) Inventeur: BOZIC, Ante, 60410 Verberie (FR); CLAPIT, Bastien, 60410 Verberie (FR); LAMBEY, Julien, 60410 Verberie (FR)
(74) Mandataire: Regimbeau
(86) Numéro de dépôt international: PCT/EP2016/055192
(87) Numéro de publication internationale: WO 2016/146489

(56) Documents cités:
- DE-A1-102009 011 247
- FR-A1- 2 996 176
- US-A- 4 244 184

## Description

### DOMAINE TECHNIQUE GENERAL

L'invention appartient au domaine des assistances hydrauliques sur véhicule et en particulier l'engagement et le désengagement de ces assistances.
Les assistances hydrauliques temporaires sont effectuées à l'aide de machines hydrauliques qui peuvent fournir du couple aux roues non motorisées mécaniquement. Ces machines transforment l'énergie hydraulique d'une huile sous pression en une énergie mécanique, ou inversement.
On définit deux phases d'utilisation : la phase d'assistance qui permet d'apporter un gain de motricité/couple et une phase de roue libre. Entre ces deux phases se trouvent deux phases transitoires permettant d'engager ou de dégager l'assistance hydraulique.
Pour activer de telles assistances, les circuits hydrauliques sont mis sous pression grâce à une pompe de gavage. Cette pression sert notamment à engager les moteurs.

### ETAT DE L'ART

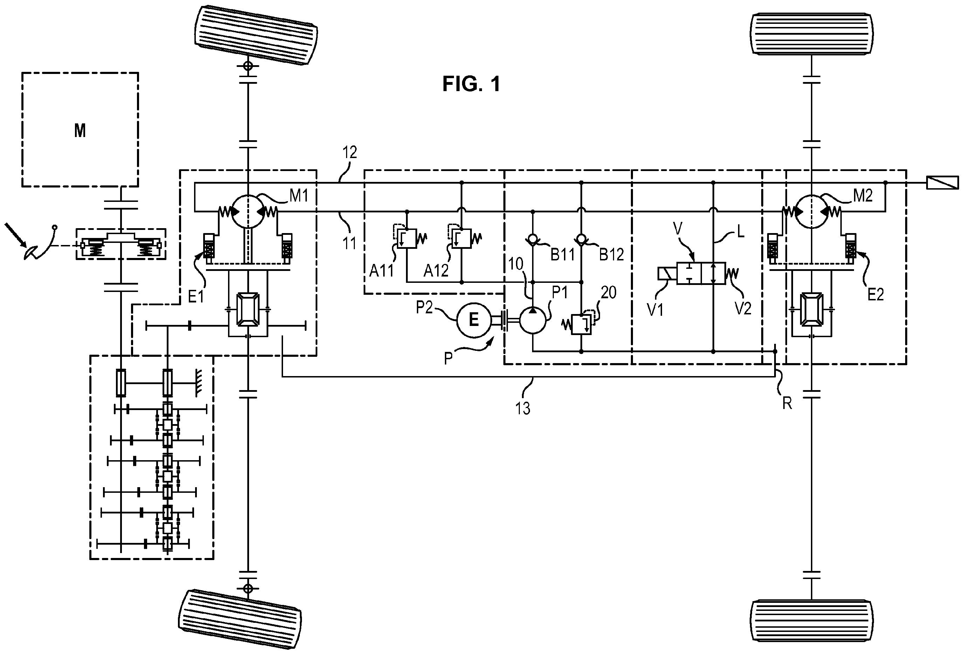

La **figure 1** détaille plus précisément un schéma hydraulique de l'art antérieur.
Sur un véhicule V, une première machine hydraulique M1 est montée sur l'essieu avant et une deuxième machine hydraulique M2 est montée sur l'essieu arrière. Par machines, on signifie qu'elles peuvent fonctionner en moteur ou en pompe.
La configuration présentée correspond à une « chaîne à vélo » (document FR 2 996 176), c'est-à-dire qu'en utilisation principale la première machine M1 fait office de pompe pour la deuxième machine M2 qui fait office de moteur.

A cette fin, le refoulement de la première machine M1 est relié à l'admission de la deuxième machine M2 par une ligne 11 dite haute pression et le refoulement de la deuxième machine M2 est relié à l'admission de la première machine M1 par une ligne 12 dite basse pression.
Les termes de haute et basse pression correspondent à une utilisation en marche avant avec apport de couple (« utilisation principale »).
Par conséquent, comme les pressions peuvent s'inverser, les termes de première ligne 11 et de deuxième ligne 12 seront préférés.

Une groupe électro-pompe P, avec notamment une pompe de gavage P1 et un moteur électrique P2, est prévu pour le gavage des lignes 11, 12. A titre d'exemple, la pompe de gavage P1 peut aussi être alimentée par d'autres éléments, tel qu'un essieu ou un moteur thermique M.
Un limiteur de pression 20 est placé en dérivation de la pompe P1 pour la protéger d'éventuelles surpressions.

La pompe de gavage P1 alimente par une ligne de gavage 10 les première et deuxième lignes 11, 12, *via* deux clapets anti-retour B11, B12 qui empêche l'huile d'être refoulée vers la pompe P1 lorsque la pression de gavage est inférieure aux pressions d'utilisation.
L'huile provient d'une ligne de drainage 13 qui est relié à un ou plusieurs réservoirs R.
D'une façon classique, deux limiteurs de pression A11, A12 protègent les première et deuxième lignes 11, 12 des surpressions en déversant de l'huile dans la ligne de gavage 10.

Le circuit hydraulique présente aussi une valve de mise à vide V située sur une ligne de mise à vide L.

La ligne de mise à vide relie la première ou la deuxième ligne 11, 12 (on peut éventuellement mettre un sélecteur entre les lignes 11 et 12) à la ligne de drainage 13 qui conduit au réservoir R.

La valve V est une valve 2/2, comprenant une entrée et une sortie. L'entrée est reliée à la ligne 12 et la sortie à la ligne de drainage 13. La valve V possède un état passant et un état bloquant.
Le changement vers un état bloquant se fait à l'aide d'un tiroir solénoïde V1 qui est piloté électriquement. Ce changement d'état provoque une première phase transitoire en permettant l'activation effective de l'assistance hydraulique puisque les lignes haute et basse pression 11, 12 ne sont alors plus reliées au réservoir R et peuvent monter en pression. Cette montée en pression permet d'enclencher les coupleurs E1 et E2, qui lient les composants des machines hydrauliques M1 et M2 aux arbres de sortie des dites machines, de manière à les rendre actives sur le véhicule, c'est-à-dire d'engager le système. Ces coupleurs peuvent être du type embrayages à disques ou à crabot, par exemple du même type que l'état de l'art de boite de vitesse. Ils peuvent aussi représenter le couplage de moteurs à pistons radiaux qui se désengagent de leur came par rétractation des pistons.

Inversement, un ressort V2 maintient en position de repos la valve V en un état passant. Dès lors que le tiroir V1 n'est plus piloté, la valve V reprend une position passante et provoque une deuxième phase transitoire, dans laquelle la pression dans la ligne basse pression V2 chute, dégageant ainsi l'assistance hydraulique.

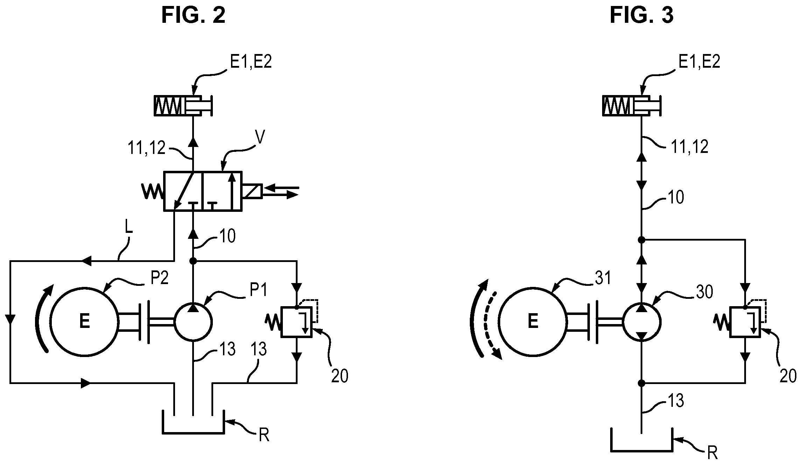

La **figure 2** représente une alternative simplifiée avec une valve V' qui en position de repos ouvre la ligne de mise à vide L et bloque la ligne de gavage 10 et inversement en position pilotée. Cette valve V' est elle aussi pilotée électriquement par un solénoïde.

Ainsi, pour ces deux étapes transitoires, il faut intervenir électroniquement sur plusieurs éléments, et notamment les valves V, V' et la pompe de gavage, ce qui impose des contraintes structurelles et de réseaux électriques.

### PRESENTATION DE L'INVENTION

Un des objectifs de l'invention est de simplifier les architectures actuellement existantes en améliorant les performances du dispositif. Pour cela, l'invention propose un dispositif selon la revendication 1.

Grâce à l'activation de la pompe en aspiration dans le circuit de gavage, on améliore la deuxième phase transitoire en accélérant la mise à vide des première et deuxième lignes. La circulation en sens inverse du fonctionnement en gavage, du débit à travers la pompe, peut être passive (extinction de la pompe et décompression des lignes) ou active (pilotage de la pompe). Dans la suite de la description on utilisera la terminologie « aspiration » pour couvrir ce concept.

Plus précisément, un premier aspect de l'invention propose un dispositif dans lequel la pompe est configurée pour aspirer *via* la ligne de gavage de l'huile depuis la première ou la deuxième ligne, l'huile étant refoulée vers le réservoir par ladite pompe.

Dans ce contexte selon d'autres caractéristiques avantageuses de l'invention :
- le dispositif comprend en outre un sélecteur basse pression entre les première et deuxième lignes et relié à la ligne de gavage , ledit sélecteur sélectionnant la ligne de plus basse pression entre les première et deuxième lignes, de sorte que l'huile est aspirée dans la ligne de plus basse pression et est refoulée vers le réservoir grâce à ladite pompe (puisse circuler en sens inverse du fonctionnement en gavage et se décompresser dans le réservoir à travers la ligne de gavage et la pompe de gavage).
- des limiteurs de pression sont disposés en parallèle du sélecteur entre la ligne de gavage et les première et deuxième lignes, de façon à protéger ces deux dernières de surpression.
- le sélecteur basse pression est un sélecteur de circuit inversé laissant toujours la ligne de plus basse pression parmi les première et deuxième lignes en communication avec la ligne de gavage.
- le sélecteur basse pression comprend deux clapets anti-retour dos-à-dos comprenant chacun un élément d'étanchéité, par exemple une bille, et un siège, les étanchéités formées par exemple par des billes étant séparées l'une de l'autre par une tige empêchant que les deux clapets ne soient fermés en même temps.
   le sélecteur basse pression comprend un limiteur de pression en parallèle de chaque clapet anti-retour, le sélecteur et les clapets faisant partie d'une seule et même valve.
- le sélecteur basse pression et les limiteurs de pression sont formés par une seule valve, ladite valve comprenant une cartouche dans lequel peut coulisser un poussoir et un pion selon l'axe longitudinal X-X' de la valve, dans lequel :
   - le poussoir sépare la cartouche en un premier volume alimenté par la première ligne et en un second volume alimenté par la deuxième ligne, les deux volumes pouvant communiquer entre eux par un canal interne compris dans le poussoir,
   - le poussoir définit un volume annulaire avec la cartouche, le volume annulaire communiquant alternativement avec le premier ou le second volume selon la position en translation du poussoir dans la cartouche selon l'axe longitudinal X-X',
   - le pion comprend une première extrémité adaptée pour obstruer ledit canal dans une position de repos, et une deuxième extrémité au contact d'un ressort qui maintient le pion en position de repos, le pion étant mobile en translation selon l'axe longitudinal X-X' pour ouvrir ou obturer le canal interne,
      de sorte que lorsque le canal est obstrué, la position du poussoir est fonction des forces issues des pressions du premier volume et du deuxième volume s'exerçant de part et d'autre du poussoir, et la ligne de gavage est ainsi mise en communication avec la ligne qui a la plus basse pression parmi les première et deuxième lignes,
   - le pion comprend une première surface débouchant dans le premier volume sur laquelle s'exerce une force issue de la pression du premier volume, et une deuxième surface débouchant dans la second volume sur laquelle s'exerce une force issue de la pression du second volume, les deux forces s'opposant toutes deux à la force du ressort,
      de sorte que lorsque les deux forces sont supérieures à celle du ressort, le pion subit une translation et ouvre ledit canal, mettant ainsi en communication les lignes haute et basse pression.

Contrairement aux architectures connues où la pompe de gavage sert uniquement à pomper et à alimenter la ligne de gavage en huile, cet aspect de l'invention propose d'utiliser la pompe de gavage pour aspirer l'huile et ainsi favoriser le désengagement. L'activation en aspiration dans la ligne de gavage se fait durant un laps de temps adapté (en fonction du volume d'huile et des caractéristiques de la pompe). Ainsi, la phase de désengagement qui était jusqu'à présent passive (arrêt du pilotage d'une valve avec notamment coupure de la pompe de gavage) devient active.
Outre la suppression d'une commande électromécanique de valve, la ligne de mise à vide peut être supprimée, d'où une simplification de l'architecture.

Et un deuxième aspect propose un dispositif comprenant en outre une valve de mise à vide avec un tiroir de pilotage, et une ligne de mise à vide, ladite valve possédant :
- une position de repos non pilotée, dans laquelle :
   - la première ligne ou la deuxième ligne (voire un sélecteur de circuit sélectionnant la ligne à plus haute pression parmi la première ligne ou la deuxième ligne) est reliée au réservoir *via* la ligne de mise à vide,
   - la ligne de gavage est fermée,
- une position pilotée, dans laquelle :
   - la ligne de gavage est reliée à la ligne haute pression ou la ligne basse pression,
   - la ligne de mise à vide est fermée, dans lequel le tiroir de pilotage est piloté par la pression de la ligne de gavage, de sorte que ladite valve est pilotée hydrauliquement par la pompe de gavage et que l'aspiration de l'huile dans la ligne de gavage par ladite pompe de gavage provoque la mise en position de repos de la valve de mise à vide, permettant la décompression des première et deuxième lignes.
Contrairement à l'art antérieur où la valve de mise à vide est pilotée électriquement, la valve ici est doublement pilotée hydrauliquement. De cette façon, le pilotage est purement hydraulique et la mise à vide est accélérée grâce à l'aspiration de la pompe. Dans ce cas, la version passive de la mise à vide (simple décompression de la ligne de gavage sans activation de la pompe en sens inverse du fonctionnement en gavage) est alors plus facilement réalisable. La solution reste compatible avec une mise à vide active, qui est plus rapide.

Dans ce contexte selon d'autres caractéristiques avantageuses de l'invention :
- la valve de mise à vide comprend une position intermédiaire étanche empêchant toute communication entre les lignes haute et basse pression d'une part et la ligne de gavage et le réservoir d'autre part.
- l'aspiration se fait par inversion du sens de rotation de la pompe.
- la pompe est une pompe à inversion de cylindrée (33), de sorte que l'aspiration se fait par cylindrée négative et non pas par inversion du sens de rotation de la pompe.
- la pompe est à cylindrée variable.

Enfin, l'invention propose un procédé (revendication suivante).

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
- La figure 1 représente un circuit hydraulique et notamment de gavage tel que l'art antérieur en connait,
- La figure 2 représente une schématisation de l'art antérieur,
- La figure 3 représente une schématisation d'un aspect de l'invention,
- La figure 4 représente un circuit d'un premier mode de réalisation d'un aspect de l'invention,
- La figure 5 représente un circuit d'un deuxième mode de réalisation du même aspect de l'invention,
- La figure 6 représente une valve permettant la mise en œuvre du circuit de la figure 5,
- La figure 7 représente un circuit d'un mode de réalisation selon un autre aspect de l'invention,
- La figure 8 représente un autre mode de réalisation de la pompe de gavage,
- La figure 9 représente un autre mode de réalisation de la pompe de gavage, intégrée dans un autre mode de réalisation du circuit,
- La figure 10 représente un schéma d'une partie d'une machine hydraulique.

### DESCRIPTION DETAILLEE

A présent, plusieurs aspects et plusieurs modes de réalisation de ces aspects vont être décrits.

Le dispositif comprend deux machines hydrauliques M1, M2 en fonctionnement de chaine à vélo, comme mentionné en introduction. Ces machines M1, M2 sont reliées entre eux par une première ligne 11 et une seconde ligne 12 et alimentent les machines en huile.

Selon les modes de fonctionnement, le sens de circulation de l'huile et la pression dans ces lignes 11, 12 peuvent changer.

Par exemple, lorsque le véhicule équipé est en marche avant et en mode « apport de couple », la première machine M1 fait office de pompe et la deuxième machine M2 fait office de moteur. En considérant que la première ligne 11 relie le refoulement de la première machine M1 à l'admission de la deuxième machine M2 et que la deuxième ligne 12 relie le refoulement de la deuxième machine M2 à l'admission de la première machine M1, on aura dans ce cas une haute pression dans la première ligne 11 et une basse pression dans la deuxième ligne 12 et un sens de circulation de l'huile de la première machine M1 vers la deuxième M2 dans la ligne 11.

Par haute pression, on entend des pressions pouvant être supérieures à quelques centaines de bar, par exemple 400 bars et basse pression des pressions de quelques dizaines de Bar, par exemple 10 ou 30 Bar. La basse pression se différencie de la pression des réservoirs d'huile sans pression, par exemple représentés par les carters des machines M1 et M2, et le réservoir sans pression R, sensiblement reliés à la pression atmosphérique. La pression de basse pression différente de la pression atmosphérique est d'une manière connue nécessaire pour un bon fonctionnement d'une transmission en circuit fermé.

En fonctionnement, une transmission en boucle fermé présente une ligne HP et une ligne BP. Si aucun couple n'est produit par les machines, les deux lignes sont à la pression de BP, qui est une pression minimale pour le circuit fermé en fonctionnement.

En marche arrière, le sens de circulation de l'huile s'inverse et la haute pression se trouve alors dans la deuxième ligne 12 et la basse pression dans la première ligne 11.

Similairement, lorsque le véhicule est en « retenue », par exemple en descente, les pressions peuvent aussi changer selon les lignes 11, 12.

Ces machines M1, M2 sont embrayées, c'est-à-dire engagées, grâce à des coupleurs E1, E2 alimentés hydrauliquement par les première et deuxième lignes 11, 12. Les coupleurs représentés relient les blocs des machines hydrauliques aux arbres qui les traversent, et rendent les machines actives.

Un circuit de gavage est prévu pour alimenter les lignes 11, 12 en huile afin de permettre l'engagement des machines M1, M2 et aussi de compenser les fuites d'huile. Ce circuit permet de maintenir les lignes auxquelles il est raccordé à la pression minimale basse pression, dénommée pression de gavage. Les lignes 11 et 12 sont donc ainsi toujours au moins à la pression de gavage quand le système est activé. Pour cela, une pompe de gavage 30, qui sera appelée « pompe 30 » est prévue. Elle est reliée à réservoir R par une ligne de drainage 13 et peut alimenter les première et deuxième lignes 11, 12 *via* notamment une ligne de gavage 10.

La pompe de gavage 30 peut délivrer une huile sous une pression de quelques dizaines de bar, sensiblement équivalente à la basse pression.

La mise en pression des lignes HP et BP de la boucle fermée par le circuit de gavage, permet l'activation des machines hydrauliques M1 et M2, via l'actionnement des coupleurs B1 et E2. Inversement, la sortie d'huile de la boucle fermée, induit une baisse de pression dans les lignes, qui relâche les coupleurs E1 et E2 et libère les machines M1 et M2, ce qui les rend inactives.

### Premier aspect de l'invention

La **figure 3** représente un schéma simplifiée du premier aspect de l'invention.

La pompe 30 est configurée pour pouvoir aspirer de l'huile depuis la ligne de gavage 10 et notamment la refouler vers le réservoir R via la ligne de drainage 13.
La mise à vide se fait ainsi par inversion du sens de fonctionnement de la pompe 31 et il n'y a plus besoin de valve de mise à vide ni de ligne spécifique de mise à vide.
Pour cela, les première et deuxième lignes 11, 12 ne comprennent plus chacune un clapet anti-retour autonome comme auparavant. En effet, l'aspiration dans la ligne de gavage 10 conduirait au verrouillage de ces clapets anti-retour, ce qui empêcherait l'huile de rejoindre la ligne de gavage 10.

Lorsque l'assistance hydraulique est requise, le dispositif fonctionne classiquement, avec une activation de la pompe 30 pour injecter de l'huile dans la ligne de gavage 10 qui va ensuite mettre sous pression les première et deuxième lignes 11, 12 et le cas échéant les coupleurs E1, E2 pour l'engagement des machines M1, M2.

En revanche, lorsque l'assistance hydraulique n'est plus requise, la pompe 30 inverse son sens de fonctionnement, c'est-à-dire qu'au lieu de prélever de l'huile dans le réservoir R pour l'injecter dans la ligne de gavage 10, elle prélève l'huile dans les première et/ou deuxième lignes 11, 12 *via* la ligne de gavage 10 et l'envoie vers le réservoir R. Ainsi, les première et deuxième lignes 11, 12 sont décompressées et le désengagement des machines M1, M2 est effectué grâce à l'aspiration par la pompe 30 du volume d'huile nécessaire.
Le désengagement est effectué rapidement grâce à l'aspiration de la pompe 30 qui est considéré comme plus efficace qu'une simple mise à vide par ouverture d'une valve de mise à vide.

Selon les architectures, seule la ligne correspondant à celle en basse pression en marche avant et en apport de couple, parmi les deux lignes 11, 12, est reliée à la ligne de gavage 10.
Plus précisément, la mise à vide produit des cavitations dans les cylindres des machines hydrauliques M1, M2. La décompression de la ligne de plus basse pression crée des volumes morts sous les pistons et du fait de la rotation des machines M1, M2, les espaces morts sont remplis par la ligne haute pression, ce qui permet la mise à vide de la ligne de plus haute pression aussi. Lorsque les machines M1 et M2 tournent, l'une d'elles va prélever de l'huile dans la ligne à plus haute pression, vers la ligne basse pression, ou elle sera aspirée via le clapet. La ligne basse pression étant vidée de par ailleurs, la pression va donc baisser dans les deux lignes en même temps. Ainsi, l'invention permet sur ce circuit particulier, de faire baisser la pression dans les deux lignes, même si une seule est reliée directement à la pompe. L'expression «reliée directement » doit être comprise comme signifiant « sans passer à travers une autre machine hydraulique » ou « raccordé par un clapet ouvert à la ligne allant en direction de la pompe de gavage ».
C'est un processus de cavitation volontaire, provoqué notamment par l'aspiration de la pompe 30, qui accélère la mise à vide.

On est ainsi passé d'une mise à vide passive (arrêt de commande de la pompe et de la valve de mise à vide) à une mise à vide active, tout en supprimant une valve (la valve de mise en vide) et supprimant matériellement une ligne (la ligne de mise à vide présente dans l'art antérieur).

Dans le cas présent, la pompe 30 est ici alimentée par un groupe électrique 31, formant un groupe électro-pompe GEP. Un limiteur de pression 20 est disposé en parallèle de la pompe 30, d'une façon classique.
Dans ce cas de l'électro-pompe 30, 31, l'inversion du sens de rotation du moteur électrique 31 fait fonctionner la pompe 30 en sens inverse. La vitesse, la durée d'activation sont fonction du volume d'huile à aspirer et des caractéristiques du dispositif, telles que la cylindrée.
Il est ainsi nécessaire de disposer d'un GEP 30, 31 pouvant fonctionner dans les deux sens de rotation.
L'utilisation d'un groupe électrique 31 n'est pas propre au premier aspect, ni limitatif.

Plusieurs modes de réalisation de ce premier aspect sont possibles.

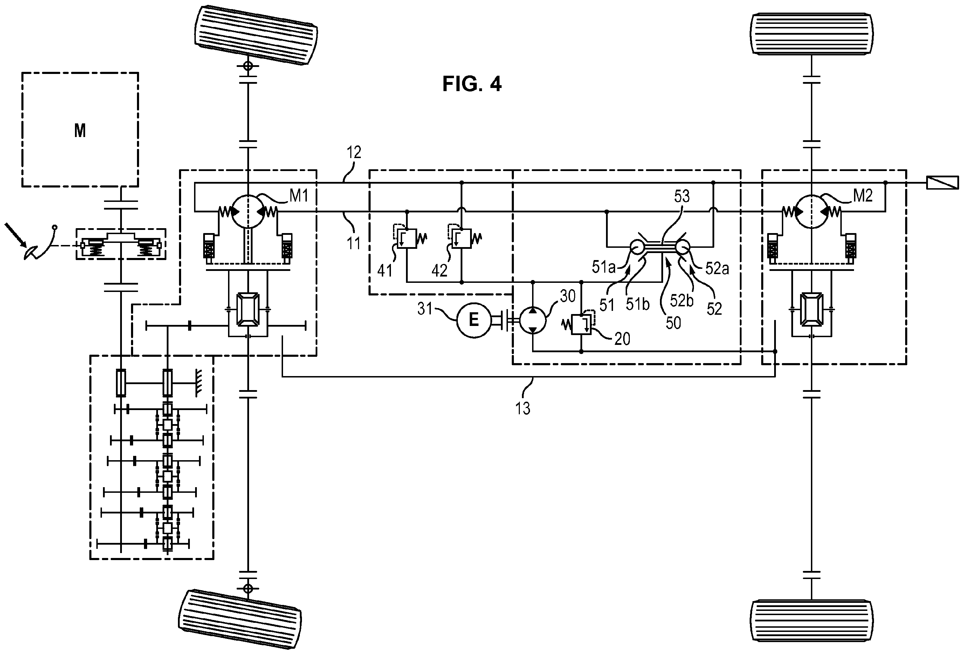

Comme représenté en **figure 4****,** la ligne de gavage 10 est avantageusement relié aux première et deuxième lignes 11, 12 par un sélecteur basse pression 50 (en terminologie anglo-saxonne « *inverse shuttle valve* », soit « sélecteur de circuit inversé »). Cela permet de gaver la ligne qui a toujours la pression la plus basse (lorsque le véhicule est en marche arrière ou en retenue, les pressions dans les lignes 11, 12 peuvent s'inverser).
Le sélecteur 50 laisse ouvert en permanence la ligne de plus basse pression avec la ligne de gavage 10.

Dans cette configuration, on retrouve des limiteurs de pression 41, 42 en parallèle du sélecteur 50, qui protège les première et deuxième lignes 11, 12 de surpression éventuelle.
Le sélecteur basse pression 50 est typiquement constitué de deux clapets anti-retour 51, 52, dos-à-dos, comprenant chacun un élément d'étanchéité, par exemple une bille, ou un clapet de forme adaptée au débits et aux pressions du système, Un élément d'étanchéité, pour la suite nous considérerons par exemple et sans que cela ne soit limitatif, une bille, 51a, 52a pouvant être logée dans un siège 51a, 51b respectifs pour obturer le passage de l'huile.
Les billes 51a, 52a sont maintenues à une distance minimale l'une de l'autre par une tige rigide 53, de sorte qu'un des deux clapets 51, 52 est en permanence ouvert. Les billes 51a, 52a peuvent aussi être solidaires de la tige rigide 53.
Dès qu'une pression est supérieure d'un côté, la bille 51a, 52a se plaque contre le siège 51b, 52b et obture la communication entre la ligne 11, 12 et la ligne de gavage 10, libérant ainsi l'ouverture de l'autre côté entre l'autre ligne 12, 11 et la ligne de gavage 10.
Par exemple sur la **figure 4****,** la pression est supérieure sur la deuxième ligne 12, ce qui provoque la fermeture du clapet 52 avec la bille 52a, ladite bille 52a provoquant grâce à la tige 53 l'ouverture du clapet 51, mettant ainsi la première ligne 11, de plus basse pression, avec la ligne de gavage 10.
Il existe une position intermédiaire où les trois lignes 10, 11, 12 sont ouvertes.

En outre, grâce à la tige 53 qui maintient un des deux clapets 51, 52 ouvert, il n'y a pas de risque d'obturation du sélecteur 50 lorsque la pompe 30 aspire dans la ligne de gavage 10 et crée une dépression.

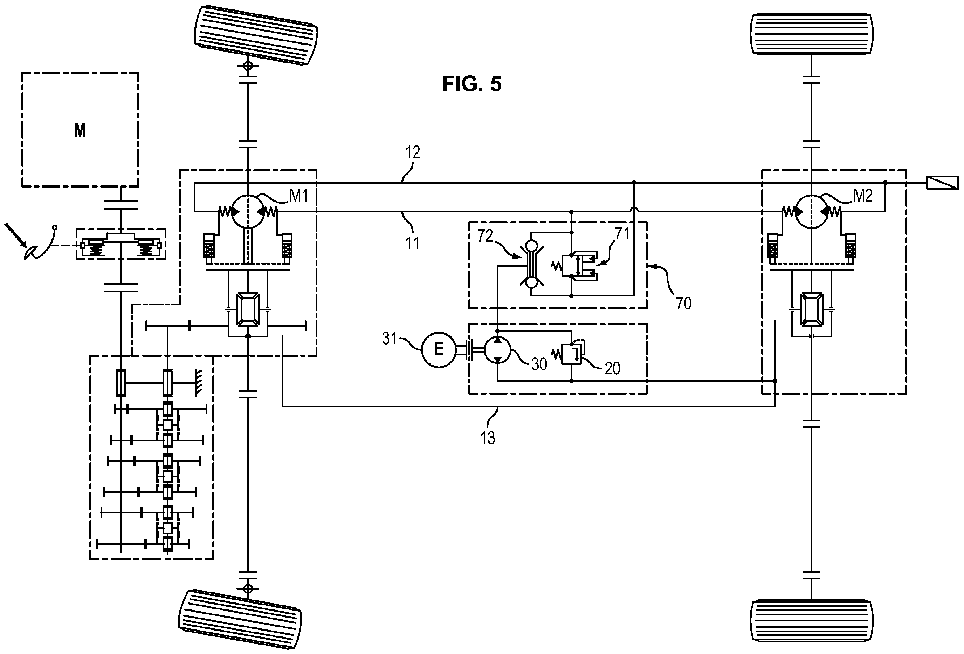

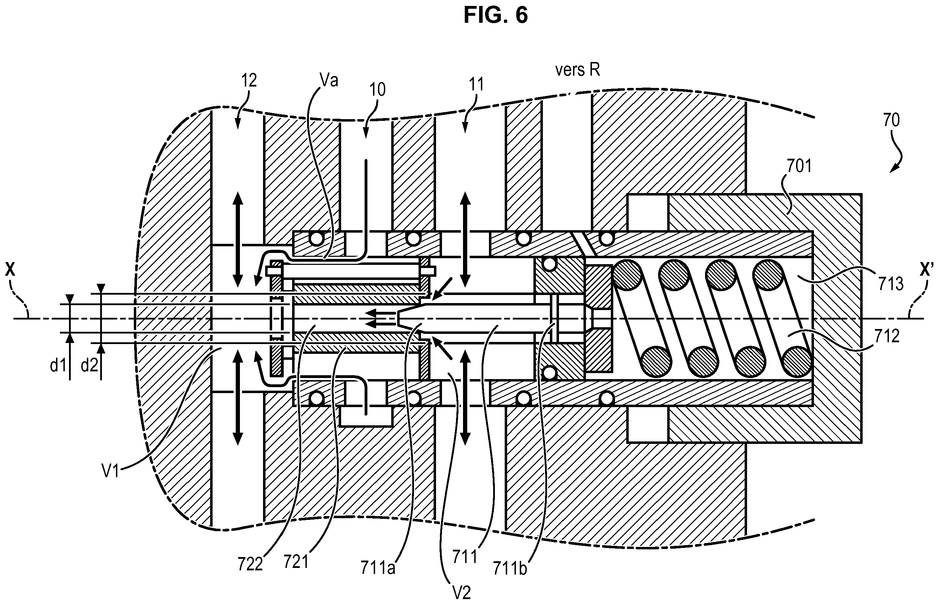

Les **figures 5** **et** **6** représentent une autre valve 70 comprenant à la fois un limiteur de pression 71 et un sélecteur basse pression 72. Dans cette valve 70, le limiteur 71 est un double limiteur situé entre les première et deuxième lignes 11, 12.
Une surpression dans une des deux lignes 11, 12 sera évacuée par déversement d'huile dans l'autre ligne 12, 11.

La valve 70 comprend une cartouche 701 dans lequel se trouvent un pion 711 et un poussoir 721. Ces deux derniers peuvent coulisser en translation relative selon un axe longitudinal X-X'.

Le poussoir 721 délimite le volume de la cartouche 701 en un premier volume V1 alimenté par la première ligne 11 et en un second volume V2 alimenté par la deuxième ligne 12. Les deux volumes V1, V2 ne sont pas complètement indépendants et peuvent communiquer fluidiquement entre eux par un canal interne 722 qui est compris dans le poussoir 721. En outre, le poussoir 721 définit avec la cartouche 701 un volume annulaire Va entre ledit poussoir 721 et la cartouche 701. Ce volume annulaire Va est toujours en communication avec la ligne de gavage 10 et est alternativement en communication avec le premier ou le second volume V1, V2. Ainsi, même lorsque la pompe de gavage 10 aspire, il n'y a pas de risque d'obturation.

Le pion 711 comprend une première extrémité 711a qui est adaptée pour obstruer le canal interne 722 dans une position de repos et pour l'ouvrir dans une position de travail. Ces deux positions s'obtiennent par une translation du pion 711 selon X-X'. Une deuxième extrémité 711b dudit pion 711 est au contact d'un ressort 712 qui maintient le pion 711 en position de repos.

Lorsque le canal interne 722 est obstrué, la position du poussoir 721 dépend des pressions s'exerçant dans les premier et deuxième volumes V1, V2 :
- Lorsque la pression dans le premier volume V1 est supérieure à celle du deuxième volume V2, le poussoir 721 met en communication la ligne de drainage 10 avec le deuxième volume V2 et donc la deuxième ligne 12,
- Lorsque la pression dans le deuxième volume V2 est supérieure à celle du volume V1, le poussoir 721 met en communication la ligne de drainage 10 avec le premier volume V1 et donc la première ligne 11.

Ainsi, le poussoir 721, lorsqu'il est obstrué, a la fonction de sélecteur basse pression 72.

Le pion 711 comprend en outre une première surface S1 débouchant dans le premier volume V1 sur laquelle s'exerce une force issue de la pression du premier volume V1. En pratique, cette première surface S1 correspondant à la surface obstruant le canal interne 722. Le pion comprend similairement une deuxième surface S2 débouchant dans le second volume V2 et sur laquelle s'exerce une force issue de la pression du second volume V2. En pratique, cette surface S2 est située entre le volume V2 et un logement 713 du ressort 712.

Les deux forces s'exercent dans le même sens et tendent à mettre le pion 711 en position de travail, c'est-à-dire à compresser le ressort 712 et à ouvrir le canal interne 722.

Ainsi, lorsque la somme de ces deux forces est supérieure à la force du ressort, le canal interne 722 s'ouvre et les deux volumes V1, V2 communiquent entre eux pour permettre à la surpression d'être évacuée d'une ligne 11, 12 vers l'autre 12, 11. Le pion 711 et le ressort 712 forment le limiteur de pression 71.
Il est possible d'obtenir des tarages différents entre le premier volume V1 et le deuxième volume V2, en choisissant des surface S1, S2 adaptées. En pratique, étant donné les pressions en jeu (par exemple 400 bars dans une ligne contre 30 bars dans l'autre), seul un des deux volumes V1, V2 exerce une force significative contre le ressort 713. Cette valve 70 qui intègre un limiteur 71 qui agit avec un seul ressort 713 et qui intègre un sélecteur de basse pression 72 permet une meilleure compacité du dispositif.

Quel que soit le mode de réalisation, on obtient un dispositif dont l'engagement et le dégagement des machines M1, M2 est piloté uniquement par la pompe de gavage 30 et l'inversion de son sens de fonctionnement. Il n'est plus nécessaire de recourir à des valves pilotées électriquement.

### Second aspect de l'invention

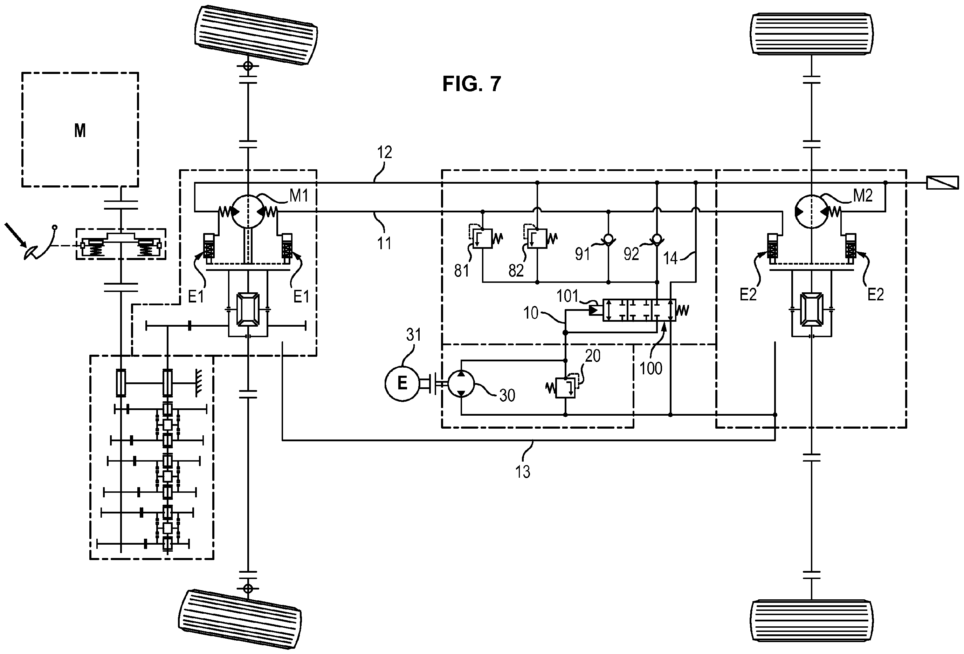

La **figure 7** représente un schéma hydraulique du second aspect de l'invention.
Dans cette variante, une valve de mise à vide 100 avec un tiroir 101 et une ligne de mise à vide 14 sont prévues.
La ligne de mise à vide 14 relie au moins une des deux première ou deuxième lignes 11, 12 au réservoir R, *via* par exemple la ligne de drainage 13.
Dans une position de repos, la valve de mise à vide 100 :
- ferme la ligne de gavage 10, ce qui signifie que les première et deuxième lignes 11, 12 ne peuvent être alimentées en huile par la pompe 30 ;
- ouvre la ligne de mise à vide 14, ce qui permet la mise à vide du dispositif.
Dans une position pilotée, la valve de mise à vide 100 :
- ouvre la ligne de gavage 10, ce qui permet l'alimentation en huile des première et deuxième lignes 11, 12,
- ferme la ligne de mise à vide 14.
La valve de mise à vide 100 comprend avantageusement une position intermédiaire de sécurité, étanche, dans laquelle les lignes de gavage 10 et de mise à vide 14 sont fermées.

Dans ce second aspect de l'invention, le tiroir 101 est piloté hydrauliquement par la ligne de gavage 10.

De cette façon, lorsque l'assistance hydraulique est requise, la pompe 30 est activée, ce qui va mettre la ligne de gavage 10 sous pression. Le tiroir 101 est alors piloté et la valve de mise à vide passe en position pilotée pour permettre le gavage des première et deuxième lignes 11, 12.

Inversement, lorsque l'assistance hydraulique n'est plus requise, la pompe 30 est activée en sens inverse, ce qui provoque l'aspiration de l'huile dans la ligne de gavage 10 et va accélérer la mise en position de repos de la valve de mise à vide 100. La décompression des première et deuxième lignes 11, 12 se fait ainsi rapidement et permet le désengagement des machines M1, M2.

On retrouve des limiteurs de pression 81, 82 et des clapets anti-retour 91, 92 (en sens passant de la ligne de gavage 10 vers les lignes 11, 12) positionnées en parallèle entre les première et deuxième lignes 11, 12 et la ligne de gavage 10 (lorsque la valve de mise à vide 100 est en position pilotée).

Selon les alternatives, la ligne de mise à vide 14 est reliée uniquement à la ligne correspondant à la basse pression en marche avant et en mode apport de couple.
Il est aussi possible de prévoir un sélecteur de basse pression qui sélectionne la ligne de plus basse pression entre la première et la deuxième ligne 11, 12 pour la relier à la ligne de mise à vide 14.
Il est aussi possible de relier les deux lignes 11, 12 à la ligne de mise à vide 14.

Similairement au premier aspect, on obtient un dispositif dont l'engagement et le dégagement des machines M1, M2 est piloté uniquement par la pompe de gavage 30 et l'inversion de son sens de fonctionnement.

### Autres modes de réalisation

Quel que soit l'aspect de l'invention, le désengagement des machines hydrauliques M1, M2 se fait grâce à la circulation en sens inverse du fonctionnement en gavage, du débit à travers la pompe, typiquement grâce à l'aspiration de la pompe de gavage 30. Cette circulation peut être passive ou active. Plusieurs types de pompes peuvent être utilisés. Pour rappel, les figures précédentes représentaient une pompe 30 entrainé par un moteur électrique 31 pouvant tourner dans les deux sens, mais cela n'est nullement limitatif.

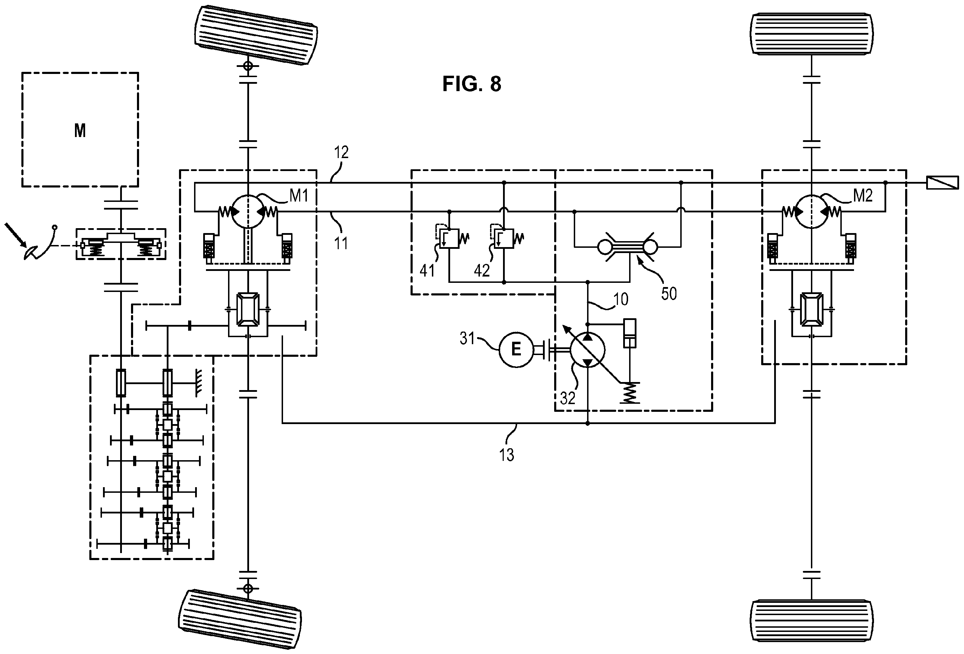

La **figure 8** représente un mode de réalisation dans lequel la pompe de gavage est une pompe à cylindrée variable 32. Il n'est plus forcément nécessaire d'avoir de limiteur de pression 20 en parallèle. Ce type de pompe connu réalise un asservissement de la cylindrée de la pompe vis-à-vis d'une consigne en pression, via une ligne de retro action et un ressort taré. Ce type de pompe équivaut à la juxtaposition d'une pompe a cylindrée fixe et d'un limiteur de pression.
La pompe à cylindrée variable 32 peut être appliquée à tous les modes de réalisation décrits précédemment.

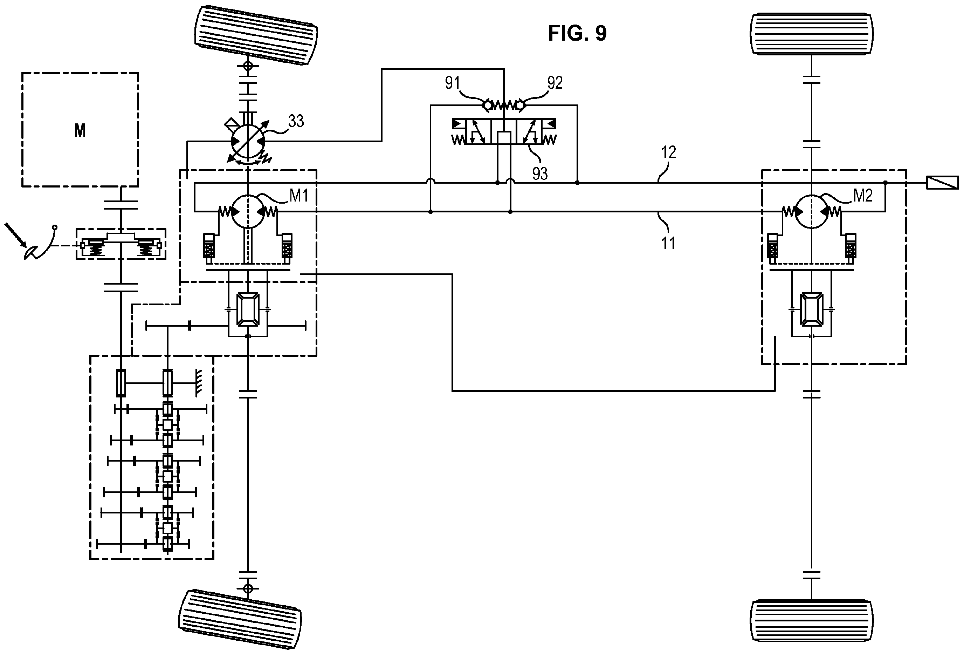

La **figure 9** représente une mode de réalisation dans lequel la pompe de gavage est une pompe à inversion de cylindrée 33. La pompe 33 tourne toujours dans le même sens mais le changement de cylindrée vers une cylindrée négative va provoquer l'aspiration.
Le principe général des modes de réalisation décrits reste le même.

En outre, la **figure 9** représente indépendamment de la pompe à in version de cylindrée 33 une architecture dans laquelle la pompe est entrainée par un essieu du véhicule (avec si besoin un réducteur et un coupleur, par exemple du type embrayage a disques).
Cette alternative concerne malgré tout principalement la pompe 33 puisqu'il faudrait sinon intégrer un inverseur de rotation entre l'essieu et la pompe pour pouvoir provoquer l'aspiration.

On retrouve sur **la** **figure 9** une fonction de limitation de la pression sur les deux lignes, par exemple sous forme des limiteurs de pression 91, 92 sous forme de clapets anti-retour pilotés ainsi qu'un sélecteur 93 tel que décrit auparavant.

La pompe peut aussi être entrainée en rotation par le moteur thermique M directement.

### Les machine hydrauliques M1, M2

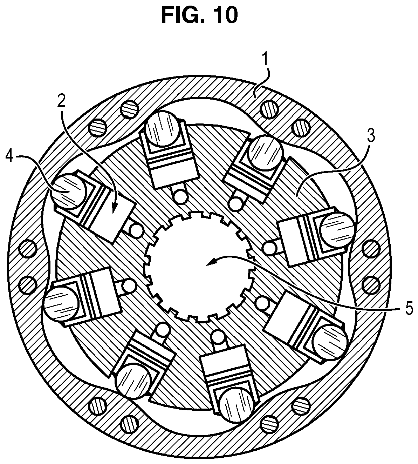

Les machines hydrauliques M1, M2 sont préférentiellement des machines à pistons radiaux, par exemple tel que schématisé sur la **figure 10****,** comprenant :
- une came lobée 1,
- une pluralité de piston 2 disposés radialement dans un bloc cylindres 3, les pistons 2 comprenant chacun un galet 4 pouvant rouler sur la came lobée 1,
- un arbre 5, pouvant être solidaire du bloc-cylindre lorsque notamment les coupleurs E1, E2 sont enclenchés.
Ces machines convertissent une énergie hydraulique en énergie mécanique grâce à la variation de cylindrée des pistons lorsqu'ils suivent la came lobée.
De telles machines M1, M2 possèdent des vitesses de rotation relativement faibles mais possèdent un couple élevé.
De telles machines M1 et M2 sont de préférence placées dans un véhicule de manière à tourner à la vitesse des roues qu'elles doivent entrainer, sans surmultiplication ou démultiplication. S'il y a une machine par essieu, cela s'entend à la vitesse moyenne des deux roues de l'essieu, via un différentiel ou un système équivalent.

Un carter (non représenté) protège l'ensemble. Le carter peut faire office de réservoir R. Le réservoir R est sensiblement à a la pression atmosphérique. Il peut y être raccordé via des reniflards, des filtres, ou des clapets, ce qui peut créer une très légère différence de pression par rapport à l'extérieur.

## Revendications

1. Dispositif comprenant :
- une première machine hydraulique (M1), pouvant fonctionner en moteur ou en pompe, et une deuxième machine hydraulique (M2), pouvant fonctionner en moteur ou en pompe, les deux machines hydrauliques (M1, M2) étant reliées par une première ligne (11) et une deuxième ligne (12) permettant l'admission ou le refoulement d'huile dans lesdites machines hydrauliques (M1, M2),
- une pompe de gavage (30, 32, 33), disposée entre un réservoir (R) et une ligne de gavage (10), la ligne de gavage (10) étant en communication avec au moins une desdites lignes (11, 12) et pouvant permettre le gavage desdites lignes (11, 12) par la pompe de gavage (30),
**caractérisé en ce que** :
- les deux machines hydrauliques (M1, M2) sont engageables grâce à des coupleurs (E1, E2) alimentés hydrauliquement par les première et deuxième lignes (11, 12),
- la pompe de gavage (30, 32, 33) est configurée pour pouvoir aspirer de l'huile dans la ligne de gavage (10) afin de permettre la décompression desdites première et deuxième lignes (11, 12).

2. Dispositif selon la revendication 1, dans lequel la pompe de gavage (30, 32, 33) est configurée pour aspirer *via* la ligne de gavage (10) de l'huile depuis la première ou la deuxième ligne (11, 12), l'huile étant refoulée vers le réservoir (R) par ladite pompe de gavage (30).

3. Dispositif selon la revendication 2, comprenant en outre un sélecteur basse pression (50, 60, 72) entre les première et deuxième lignes (11, 12) et relié à la ligne de gavage (10), ledit sélecteur (50, 60, 72) sélectionnant la ligne de plus basse pression entre les première et deuxième lignes (11 ,12), de sorte que l'huile puisse circuler en sens inverse du fonctionnement en gavage et se décompresser dans le réservoir à travers la ligne de gavage et la pompe de gavage, avantageusement aspirée dans la ligne de plus basse pression et refoulée vers le réservoir (R) grâce à ladite pompe (30, 32, 33).

4. Dispositif selon la revendication 3, dans lequel des limiteurs de pression (41, 42, 72) sont disposés en parallèle du sélecteur (50, 60, 72) entre la ligne de gavage (13) et les première et deuxième lignes (11, 12), de façon à protéger ces deux dernières (11, 12) de surpression.

5. Dispositif selon l'une des revendications 3 ou 4, dans lequel le sélecteur basse pression est un sélecteur de circuit inversé laissant toujours la ligne (11, 12) de plus basse pression parmi les première et deuxième lignes (11, 12) en communication avec la ligne de gavage (10).

6. Dispositif selon la revendication 5, dans lequel le sélecteur basse pression (50, 60, 70) comprend deux clapets anti-retour (51, 52) dos-à-dos comprenant chacun un élément d'étanchéité, par exemple une bille, (51a, 52a) et un siège (51b, 52b), les étanchéités formées par exemple des billes (51a, 52a) étant séparées l'une de l'autre par une tige (53) empêchant que les deux clapets (51, 52) ne soient fermés en même temps.

7. Dispositif selon la revendication 6, dans lequel le sélecteur basse pression comprend un limiteur de pression en parallèle de chaque clapet anti-retour, le sélecteur et les clapets faisant partie d'une seule et même valve (60).

8. Dispositif selon l'une des revendications 3 à 6, dans lequel le sélecteur basse pression et les limiteurs de pression (71) sont formés par une seule valve (70), ladite valve comprenant une cartouche (701) dans lequel peut coulisser un poussoir (721) et un pion (711) selon l'axe longitudinal X-X' de la valve (70), dans lequel :
- le poussoir (721) sépare la cartouche (701) en un premier volume (V11) alimenté par la première ligne (11) et en un second volume (V12) alimenté par la deuxième ligne (12), les deux volumes (V11, V12) pouvant communiquer entre eux par un canal interne (722) compris dans le poussoir,
- le poussoir (721) définit un volume annulaire (Va) avec la cartouche (701), le volume annulaire (Va) communiquant alternativement avec le premier ou le second volume (V11, V12) selon la position en translation du poussoir (721) dans la cartouche (701) selon l'axe longitudinal (X-X'),
- le pion (711) comprend une première extrémité (711a) adaptée pour obstruer ledit canal (722) dans une position de repos, et une deuxième extrémité (711b) au contact d'un ressort (712) qui maintient le pion (711) en position de repos, le pion (711) étant mobile en translation selon l'axe longitudinal (X-X') pour ouvrir ou obturer le canal interne (722),
de sorte que lorsque le canal est obstrué, la position du poussoir (721) est fonction des forces issues des pressions du premier volume (V1) et du deuxième volume (V2) s'exerçant de part et d'autre du poussoir (721), et la ligne de gavage (10) est ainsi mise en communication avec la ligne (11, 12) qui a la plus basse pression parmi les première et deuxième lignes (11, 12),
- le pion (711) comprend une première surface (S1) débouchant dans le premier volume (V1) sur laquelle s'exerce une force issue de la pression du premier volume (V1), et une deuxième surface (S2) débouchant dans la second volume (V2)) sur laquelle s'exerce une force issue de la pression du second volume (V2), les deux forces s'opposant toutes deux à la force du ressort (712),
de sorte que lorsque les deux forces sont supérieures à celle du ressort (712), le pion (711) subit une translation et ouvre ledit canal (722), mettant ainsi en communication les lignes haute et basse pression (11, 12).

9. Dispositif selon la revendication 1, comprenant en outre une valve de mise à vide (100) avec un tiroir de pilotage (101), et une ligne de mise à vide (14), ladite valve possédant :
- une position de repos non pilotée, dans laquelle :
- la première ligne (11), la deuxième ligne (12) ou un sélecteur de circuit sélectionnant celle parmi la première ligne (11) ou la deuxième ligne (12) celle à plus haute pression, est reliée au réservoir (R) *via* la ligne de mise à vide (14),
- la ligne de gavage (10) est fermée,
- une position pilotée, dans laquelle :
- la ligne de gavage (10) est reliée à la ligne haute pression (11) ou la ligne basse pression (12)
- la ligne de mise à vide (14) est fermée, dans lequel le tiroir de pilotage (101) est piloté par la pression de la ligne de gavage (10), de sorte que ladite valve (101) est pilotée hydrauliquement par la pompe de gavage (30) et que l'aspiration de l'huile dans la ligne de gavage (10) par ladite pompe de gavage (30) provoque la mise en position de repos de la valve de mise à vide (101), permettant la décompression des première et deuxième lignes (11, 12).

10. Dispositif selon la revendication 9, dans lequel la valve de mise à vide (100) comprend une position intermédiaire étanche empêchant toute communication entre les lignes haute et basse pression (11, 12) d'une part et la ligne de gavage (10) et le réservoir (R) d'autre part.

11. Dispositif selon l'une quelconque des revendications 1 à 10, dans lequel l'aspiration se fait par inversion du sens de rotation de la pompe de gavage (30).

12. Dispositif selon l'une quelconque des revendications 1 à 11, dans lequel la pompe de gavage est une pompe à inversion de cylindrée (33), de sorte que l'aspiration se fait par cylindrée négative et non pas par inversion du sens de rotation de la pompe.

13. Procédé de mise à vide d'un dispositif selon l'une quelconque des revendications précédentes, dans lequel la pompe de gavage (30) est activée en aspiration dans la ligne de gavage (10) pour permettre le désengagement des machines (M1, M2).

14. Procédé selon la revendication précédente, à l'aide d'un dispositif selon la revendication 11, dans lequel l'activation en aspiration de la pompe de gavage (30) se fait par inversion du sens de rotation d'un moteur électrique entrainant la pompe (30).

15. Procédé selon la revendication 13, à l'aide d'un dispositif selon la revendication 12, dans lequel l'activation en aspiration de la pompe de gavage (30) se fait par inversion de la cylindrée de la pompe (30), sans que son sens de rotation ne change.

## Patentansprüche

1. Vorrichtung, umfassend:
- eine erste hydraulische Maschine (M1), die als Motor oder als Pumpe arbeiten kann, und eine zweite hydraulische Maschine (M2), die als Motor oder als Pumpe arbeiten kann, wobei die zwei hydraulischen Maschinen (M1, M2) durch eine erste Leitung (11) und eine zweite Leitung (12) verbunden sind, die den Zufluss oder den Abfluss von Öl in den hydraulischen Maschinen (M1, M2) erlauben,
- eine Speisepumpe (30, 32, 33), die zwischen einem Vorratsbehälter (R) und einer Speiseleitung (10) angeordnet ist, wobei die Speiseleitung (10) in Kommunikation mit mindestens einer der Leitungen (11, 12) ist und die Versorgung der Leitungen (11, 12) durch die Speisepumpe (30) erlauben kann,
**dadurch gekennzeichnet, dass**:
- die zwei hydraulischen Maschinen (M1, M2) dank Kopplern (E1, E2), die von der ersten und zweiten Leitung (11, 12) hydraulisch versorgt werden, in Eingriff bringbar sind,
- die Speisepumpe (30, 32, 33) konfiguriert ist, um Öl in die Speiseleitung (10) ansaugen zu können, um die Dekompression der ersten und zweiten Leitung (11, 12) zu erlauben.

2. Vorrichtung nach Anspruch 1, wobei die Speisepumpe (30, 32, 33) konfiguriert ist, um über die Speiseleitung (10) Öl aus der ersten oder der zweiten Leitung (11, 12) ansaugen zu können, wobei das Öl von der Speisepumpe (30) zum Vorratsbehälter (R) zurückgepumpt wird.

3. Vorrichtung nach Anspruch 2, umfassend ferner ein Niederdruckwechselventil (50, 60, 72) zwischen der ersten und zweiten Leitung (11, 12) und verbunden mit der Speiseleitung (10), wobei das Wechselventil (50, 60, 72) die Leitung mit dem niedrigeren Druck zwischen der ersten und zweiten Leitung (11 ,12) wählt, so dass das in vorteilhafter Weise in die Leitung mit niedrigerem Druck angesaugte und zum Vorratsbehälter (R) dank der Pumpe (30, 32, 33) geförderte Öl durch die Speiseleitung und die Speisepumpe in umgekehrter Richtung zum Speisebetrieb zirkulieren und sich im Vorratsbehälter entspannen kann.

4. Vorrichtung nach Anspruch 3, wobei Druckbegrenzer (41, 42, 72) parallel zum Wechselventil (50, 60, 72) zwischen der Speiseleitung (13) und der ersten und zweiten Leitung (11, 12) derart angeordnet sind, dass diese beiden Letztgenannten (11, 12) vor Überdruck geschützt sind.

5. Vorrichtung nach einem der Ansprüche 3 oder 4, wobei das Niederdruckwechselventil ein Inverskreiswechselventil ist, das immer die Leitung (11, 12) mit dem niedrigeren Druck von der ersten und zweiten Leitung (11, 12) in Kommunikation mit der Speiseleitung (10) lässt.

6. Vorrichtung nach Anspruch 5, wobei das Niederdruckwechselventil (50, 60, 70) zwei Rückflusssperrklappe (51, 52) Rücken an Rücken umfasst, umfassend jeweils ein Dichtungselement, beispielsweise eine Kugel, (51a, 52a) und einen Sitz (51b, 52b), wobei die beispielsweise von Kugeln (51a, 52a) gebildeten Abdichtungen durch eine Stange (53) voneinander getrennt sind, die verhindert, dass die zwei Ventile (51, 52) gleichzeitig geschlossen sind.

7. Vorrichtung nach Anspruch 6, wobei das Niederdruckwechselventil einen Druckbegrenzer parallel zu jeder Rückflusssperrklappe umfasst, wobei das Wechselventil und die Klappen zu ein- und demselben Ventil (60) gehören.

8. Vorrichtung nach einem der Ansprüche 3 bis 6, wobei das Niederdruckwechselventil und die Druckbegrenzer (71) von einem einzigen Ventil (70) gebildet sind, wobei das Ventil eine Kartusche (701) umfasst, in welcher ein Stößel (721) und ein Stift (711) gemäß der Längsachse X-X' des Ventils (70) gleiten kann, wobei:
- der Stößel (721) die Kartusche (701) in ein erstes Volumen (V11), versorgt durch die erste Leitung (11), und in ein zweites Volumen (V12), versorgt durch die zweite Leitung (12), trennt, wobei die zwei Volumen (V11, V12) miteinander durch einen inneren Kanal (722) kommunizieren können, der in dem Stößel enthalten ist,
- der Stößel (721) ein ringförmiges Volumen (Va) mit der Kartusche (701) definiert, wobei das ringförmige Volumen (Va) abwechselnd mit dem ersten oder dem zweiten Volumen (V11, V12) je nach translatorischer Position des Stößels (721) in der Kartusche (701) gemäß der Längsachse (X- X') kommuniziert,
- der Stift (711) ein erstes Ende (711a), das zum Verschließen des Kanals (722) in einer Ruhestellung geeignet ist, und ein zweites Ende (711b) im Kontakt mit einer Feder (712), die den Stift (711) in Ruhestellung hält, umfasst, wobei der Stift (711) gemäß der Längsachse (X-X') translatorisch beweglich ist, um den inneren Kanal (722) zu öffnen oder zu verschließen,
so dass, wenn der Kanal verschlossen ist, die Position des Stößels (721) von den Kräften abhängt, die von den Drücken des ersten Volumens (VI) und des zweiten Volumens (V2) ausgehen, die beiderseits des Stößels (721) ausgeübt werden, und die Speiseleitung (10) somit mit der Leitung (11, 12) in Kommunikation versetzt wird, die den niedrigeren Druck von der ersten und zweiten Leitung (11, 12) hat,
- der Stift (711) eine erste Fläche (Sl), die in das erste Volumen (V1) ausmündet, auf die eine Kraft ausgeübt wird, die vom Druck des ersten Volumens (V1) ausgeht, und eine zweite Fläche (S2), die in das zweite Volumen (V2) ausmündet, auf die eine Kraft ausgeübt wird, die vom Druck des zweiten Volumens (V2) ausgeht, umfasst, wobei die zwei Kräfte beide der Kraft der Feder (712) entgegenwirken,
so dass, wenn die beiden Kräfte größer als die der Feder (712) sind, der Stift (711) eine Translation erfährt und den Kanal (722) öffnet, wodurch die Hoch- und Niederdruckleitung (11, 12) in Kommunikation versetzt werden.

9. Vorrichtung nach Anspruch 1, umfassend ferner ein Entlastungsventil (100) mit einem Steuerschieber (101) und eine Entlastungsleitung (14), wobei das Ventil besitzt:
- eine nicht gesteuerte Ruhestellung, in welcher:
- die erste Leitung (11), die zweite Leitung (12) oder ein Leitungs-Wechselventil, das diejenige von der ersten Leitung (11) oder der zweiten Leitung (12) mit höherem Druck wählt, über die Entlastungsleitung (14) mit dem Vorratsbehälter (R) verbunden ist,
- die Speiseleitung (10) geschlossen ist,
- eine gesteuerte Position, in welcher:
- die Speiseleitung (10) mit der Hochdruckleitung (11) oder der Niederdruckleitung (12) verbunden ist,
- die Entlastungsleitung (14) geschlossen ist,
wobei der Steuerschieber (101) von dem Druck der Speiseleitung (10) derart gesteuert wird, dass das Ventil (101) von der Speisepumpe (30) hydraulisch gesteuert wird und dass das Ansaugen von Öl in die Speiseleitung (10) durch die Speisepumpe (30) bewirkt, dass das Entlastungsventil (101) in Ruhestellung versetzt wird, was die Druckentlastung der ersten und zweiten Leitung (11, 12) erlaubt.

10. Vorrichtung nach Anspruch 9, wobei das Entlastungsventil (100) eine dichte Übergangsposition umfasst, die jede Kommunikation zwischen der Hoch- und Niederdruckleitung (11, 12) zum einen und der Speiseleitung (10) und dem Vorratsbehälter (R) zum anderen verhindert.

11. Vorrichtung nach einem der Ansprüche 1 bis 10, wobei das Ansaugen durch Umkehren der Rotationsrichtung der Speisepumpe (30) erfolgt.

12. Vorrichtung nach einem der Ansprüche 1 bis 11, wobei die Speisepumpe eine Hubraumumkehrpumpe (33) ist, so dass das Ansaugen durch negativen Hubraum und nicht durch Umkehren der Rotationsrichtung der Pumpe erfolgt.

13. Verfahren zum Entlasten einer Vorrichtung nach einem der vorangehenden Ansprüche, wobei die Speisepumpe (30) in der Speiseleitung (10) ansaugend aktiviert ist, um das Trennen der Maschinen (M1, M2) zu erlauben.

14. Verfahren nach vorangehendem Anspruch mit Hilfe einer Vorrichtung nach Anspruch 11, wobei die ansaugende Aktivierung der Speisepumpe (30) durch Umkehren der Rotationsrichtung eines Elektromotors erfolgt, der die Pumpe (30) antreibt.

15. Verfahren nach Anspruch 13 mit Hilfe einer Vorrichtung nach Anspruch 12, wobei die ansaugende Aktivierung der Speisepumpe (30) durch Umkehren des Hubraums der Speisepumpe (30) erfolgt, ohne dass sich ihre Rotationsrichtung ändert.

## Claims

1. A device comprising:
- a first hydraulic machine (M1), which can operate as a motor or as a pump, and a second hydraulic machine (M2), which can operate as a motor or as a pump, both hydraulic machines (M1, M2) being connected by a first line (11) and a second line (12) allowing the intake or the discharge of oil in said hydraulic machines (M1, M2),
- a booster pump (30, 32, 33), positioned between a reservoir (R) and a booster line (10), the booster line (10) being in communication with at least one of said lines (11, 12) and being able to allow the boosting of said lines (11, 12) by the booster pump (30),
**characterized in that**:
- both hydraulic machines (M1, M2) can be engaged by means of couplers (E1, E2) supplied hydraulically by the first and second lines (11, 12),
- the booster pump (30, 32, 33) is configured to be able to aspire oil in the booster line (10) so as to allow the decompression of said first and second lines (11, 12).

2. The device according to claim 1, wherein the booster pump (30, 32, 33) is configured to aspire oil, via the booster line (10), from the first or the second line (11, 12), the oil being discharged to the reservoir (R) by said booster pump (30).

3. The device according to claim 2, further comprising a low pressure selector (50, 60, 72) between the first and second lines (11, 12) and connected to the booster line (10), said selector (50, 60, 72) selecting the line with the lower pressure between the first and second lines (11, 12), so that oil can circulate in the reverse direction from booster operation and decompress itself in the reservoir through the booster line and the booster pump, advantageously aspired into the line with the lower pressure and discharged to the reservoir (R) by means of said pump (30, 32, 33).

4. The device according to claim 3, wherein pressure limiters (41, 42, 72) are positioned in parallel with the selector (50, 60, 72) between the booster line (13) and the first and second lines (11, 12), so as to protect the latter two (11, 12) from excess pressure.

5. The device according to one of claims 3 or 4, wherein the low pressure selector is an inverted circuit selector, always leaving the line (11, 12) with the lower pressure among the first and second lines (11, 12) in communication with the booster line (10).

6. The device according to claim 5, wherein the low pressure selector (50, 60, 70) comprises two check valves (51, 52) back to back each comprising a sealing element, for example a ball, (51a, 52a) and a seat (51b, 52b), the seals formed for example by balls (51a, 52a) being separated from one another by a rod (53) preventing the two valves (51, 52) from being closed at the same time.

7. The device according to claim 6, wherein the low pressure selector comprises a pressure limiter in parallel with each check valve, the selector and the valves forming part of a single and identical valve (60) .

8. The device according to one of claims 3 to 6, wherein the low pressure selector and the pressure limiters (71) are formed by a single valve (70), said valve comprising a cartridge (701) wherein a plunger (721) and a pin (711) can slide along the longitudinal axis X-X' of the valve (70), wherein:
- the plunger (721) separates the cartridge (701) into a first volume (V11) supplied by the first line (11) and into a second volume (V12) supplied by the second line (12), the two volumes (V11, V12) being able to communicate with one another through an inner channel (722) comprised in the plunger,
- the plunger (721) defines an annular volume (Va) with the cartridge (701), the annular volume (Va) communicating alternately with the first or the second volume (V11, V12) depending on the position in translation of the plunger (721) in the cartridge (701) along the longitudinal axis (X-X'),
- the pin (711) comprises a first end (711a) designed to block said channel (722) in a rest position, and a second end (711b) in contact with a spring (712) which holds the pin (711) in a rest position, the pin (711) being movable in translation along the longitudinal axis (X-X') for opening or blocking the inner channel (722),
so that when the channel is blocked, the position of the plunger (721) depends on the forces resulting from the pressures of the first volume (V1) and of the second volume (V2) exerted on either side of the plunger (721), and the booster line (10) is thus put into communication with the line (11, 12) which has the lower pressure among the first and second lines (11, 12),
- the pin (711) comprises a first surface (S1) leading into the first volume (V1) whereon is exerted a force resulting from the pressure of the first volume (V1), and a second surface (S2) leading into the second volume (V2) whereon is exerted a force resulting from the pressure of the second volume (V2), the two forces both opposing the force of the spring (712),
so that when both forces are greater than that of the spring (712), the pin (711) undergoes translation and opens said channel (722), thereby putting the high and low pressure lines (11, 12) into communication.

9. The device according to claim 1, further comprising a vent valve (100) with a control spool (101), and a vent line (14), said valve having:
- an un-controlled rest position, wherein:
- the first line (11), the second line (12) or a circuit selector selecting, among the first line (11) or the second line (12), that having the higher pressure, is connected to the reservoir (R) via the vent line (14),
- the booster line (10) is closed,
- a controlled position, wherein:
- the booster line (10) is connected to the high pressure line (11) or the low pressure line (12)
- the vent line (14) is closed,
wherein the control spool (101) is controlled by the pressure of the booster line (10), so that said valve (101) is hydraulically controlled by the booster pump (30) and the aspiration of oil into the booster line (10) by said booster pump (30) causes the positioning in the rest position of the vent valve (101), allowing the decompression of the first and second lines (11, 12).

10. The device according to claim 9, wherein the vent valve (100) comprises a sealed intermediate position preventing any communication between the high pressure and low pressure lines (11, 12) on the one hand and the booster line (10) and the reservoir (R) on the other hand.

11. The device according to any one of claims 1 to 10, wherein the aspiration is accomplished by reversing the direction of rotation of the booster pump (30).

12. The device according to any one of claims 1 to 11, wherein the booster pump is a displacement reversing pump (33) so that the aspiration is accomplished by negative displacement and not by reversing the direction of rotation of the pump.

13. A method for venting a device according to any one of the preceding claims, wherein the booster pump (30) is activated in aspiration in the booster line (10) to allow the disengagement of the machines (M1, M2).

14. The method according to the preceding claim, using a device according to claim 11, wherein the activation in aspiration of the booster pump (30) is accomplished by reversing the direction of rotation of an electric motor driving the pump (30).

15. The method according to claim 13, using a device according to claim 12, wherein the activation in aspiration of the booster pump (30) is accomplished by reversing the displacement of the pump (30), without changing its direction of rotation.
